Europäisches Patentamt

European Patent Office

Office européen des brevets

(11) Veröffentlichungsnummer: **0 283 049 B1**

# EUROPÄISCHE PATENTSCHRIFT

(45) Veröffentlichungstag der Patentschrift: **03.06.92**

(51) Int. Cl.⁵: **H02P 1/28**, H02P 3/24

(21) Anmeldenummer: **88104423.4**

(22) Anmeldetag: **19.03.88**

(54) Schaltungsanordnung zur Steuerung des Anlaufens und Abbremsens von Drehstrom-Asynchronmotoren und Verfahren zum Betrieb einer derartigen Schaltungsanordnung.

(30) Priorität: **20.03.87 DE 3709223**

(43) Veröffentlichungstag der Anmeldung:
**21.09.88 Patentblatt 88/38**

(45) Bekanntmachung des Hinweises auf die Patenterteilung:
**03.06.92 Patentblatt 92/23**

(84) Benannte Vertragsstaaten:
**AT BE CH DE FR GB IT LI NL SE**

(56) Entgegenhaltungen:
**EP-A- 0 216 143**
**DE-A- 2 659 540**
**US-A- 3 866 097**
**US-A- 4 181 197**

(73) Patentinhaber: **KIMO INDUSTRIE-ELEKTRONIK GMBH**
**Am Weichselgarten 19**
**W-8520 Erlangen(DE)**

(72) Erfinder: **Gibson, John P., Dr. Dipl.-Ing.**
**Hüttendorfer Weg 60**
**W-8510 Fürth/Bay(DE)**
Erfinder: **Reitter, Engelbert, Dipl.-Ing**
**Leitensteig 2**
**W-8520 Erlangen(DE)**

(74) Vertreter: **Schneck, Herbert, Dipl.-Phys., Dr. et al**
**Rau & Schneck Patentanwälte Königstrasse 2**
**W-8500 Nürnberg 1(DE)**

**Beschreibung**

Die Erfindung richtet sich auf eine Schaltungsanordnung zur Steuerung des Anlaufens und Abbremsens von Drehstrom-Asynchronmotoren gemäß dem Oberbegriff von Anspruch 1 und ein Verfahren zum Betrieb einer derartigen Schaltungsanordnung.

Eine derartige Schaltungsanordnung ist aus der älteren deutschen Patentanmeldung P 35 33 802, welche der europäischen Patentanmeldung EP-A-0216 143 entspricht, die einen Stand der Technik nach Art.54(3) EPÜ darstellt, sowie im Prinzip auch aus der vorveröffentlichten DE-OS 28 55 330 bekannt.

Eine Schaltungsanordnung gemäß dem Oberbegriff des Anspruches 1 und ein Verfahren gemäß dem Oberbegriff des Anspruches 4 sind ferner aus US-A-3 866 097 bekannt.

Eine derartige Schaltungsanordnung ermöglicht es, die günstigen eigenschaften einer an sich bekannten Sanftanlaufschaltung mit minimalem baulichem Aufwand mit den Eigenschaften bekannter Bremsschaltungen zu kombinieren, wobei sich von der Steuerungsseite her völlig neuartige Möglichkeiten eröffnen.

Der Erfindung liegt die Aufgabe zugrunde, eine derartige Schaltungsanordnung bzw. das entsprechende Betriebsverfahren so weiterzubilden, daß eine möglichst schnelle und genaue Positionierung beim Abbremsen erzielt werden kann.

Diese Aufgabe wird gelöst durch eine Schaltungsanordnung gemäß dem kennzeichnenden Teil von Anspruch 1 und durch ein Verfahren gemäß dem kennzeichnenden Teil von Anspruch 4.

Durch die erfindungsgemäße Lösung wird erreicht, daß Wegfehler während des Positionier- bzw. Bremsvorganges ausgeregelt werden und sich dementsprechend nicht fortpflanzen, d.h. es werden insbesondere Schwankungen in der Ausgangsdrehzahl, Lasteinflüsse, Fehler des Drehzahlregelkreises und Netzspannungsschwankungen ausgeglichen.

Durch die nach Anspruch 2 vorgesehene Umschalteinrichtung wird zusammen mit einer weiteren, den Drehzahlregelkreis unterbrechenden Umschalteinrichtungen eine Umschaltung auf den Betriebszustand "Abbremsen und Positionieren" erreicht.

Die nach Anspruch 3 vorgesehene weitere Differenzbildungseinrichtung ist zur Subtraktion des Restweges erforderlich, wenn nicht auf Stillstand sondern innerhalb eine bestimmten Wegstrecke auf eine niedrige Positionierdrehzahl abgebremst werden soll.

Vorzugsweise wird als Abbrems-Kurve eine Wurzelfunktion vorgesehen, da dann eine konstante Brems-Beschleunigung erreicht wird. Allerdings kann zur Erzielung sanfter Übergänge beim Beginn und am Ende des Abbrems-Vorganges eine Abweichung von einer derartigen Wurzel-Kurve vorgesehen sein bzw. je nach den Erfordernissen des jeweiligen Anwendungsfalles kann eine jeweils geeignete Brems-Kurve frei programmiert vorgegeben werden.

Ein ganz besonders vorteilhaftes Bremsverhalten wird durch die gemäß Anspruch 6 vorgesehene Betriebsweise in Verbindung mit der wegabhängigen Steuerung nach Anspruch 4 erreicht.

Weitere Merkmale, Vorteile und Einzelheiten der Erfindung ergeben sich aus der folgenden Beschreibug einer bevorzugten Ausführungsform anhand der Zeichnung. Dabei zeigen

Fig. 1  ein Blockschaltbild zur Veranschaulichung der allgemeinen Funktion einer gattungsgemäßen Schaltungsanordnung als Sanftanlauf- und Bremsschaltung, und

Fig. 2  ein Blockschaltbild einer erfindungsgemäßen Ausführungsform als Positionierantrieb.

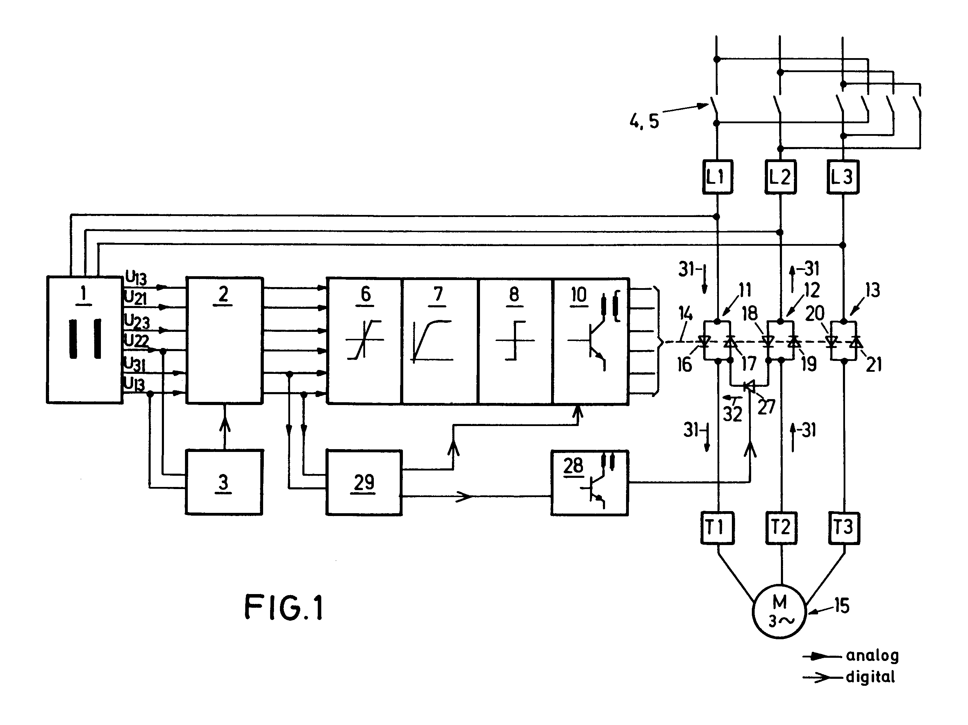

In Fig. 1 ist schematisch eine Ausführungsform dargestellt, welche eine Drehrichtungsumkehr ermöglicht.

Zur Spannungsversorgung dient ein Synchronisationstransformator 1. An dessen Ausgang schließt sich eine Umschalteinrichtung 2 in Form einer Analog-Multiplexeinrichtung an. Diese Umschalteinrichtung arbeitet in Abhängigkeit von einer Einrichtung 3, welche mit zwei Ausgängen des Transformators 1 verbunden ist, wobei die Einrichtung 3 eine Schaltungsanordnung zur Erfassung der Phasenreihenfolge an den Einspeis-Klemmen L1, L2 und L3 darstellt, und wobei diese Schaltungsanordnung im Ausführungsbeispiel mit zwei Ausgängen $U_{22}$ und $U_{13}$ des Transformators 1 verbunden ist. Die Umschalteinrichtung 2 in Verbindung mit der Einrichtung 3 zur Erfassung der Phasenlage ermöglicht weiterhin in Verbindung mit Wendeschützen 4, 5 die Umschaltung der Drehrichtung. Soweit eine derartige Drehrichtungsumkehr nicht erforderlich ist, können die Einrichtungen 2, 3 und die Wendeschütze 4, 5 entfallen.

Die Ausgänge der Umschalteinrichtung 2 (bzw. ohne Drehrichtungsumkehr des Transformators 1) sind mit einer Begrenzungseinrichtung 6 verbunden, welcher wiederum Glättungseinrichtungen 7 und ein Komparator 8 nachgeschaltet sind. In dem Komparator 8 werden die Synchronisationssignale mit den am Steuereingang 9 anliegenden Signalen verglichen. Dem Komparator 8 nachgeschaltet sind Zündeinrichtungen 10 für Phasenanschnittsteuerungen 11, 12 und 13. Das Einwirken dieser Zündeinrichtungen 10 auf die Phasenanschnittsteuerungen 11, 12 und 13 ist durch die gestrichelte Linie 14 veranschaulicht.

Jede Phasenanschnittsteuerung 11, 12, 13 ist jeweils einer Klemme $T_1$, $T_2$, $T_3$ des anzusteuernden Drehstrom-Käfigläufermotors 15 vorgeschaltet.

Im Ausführungsbeispiel besteht jede Phasenanschnittsteuerung 11 bzw. 12 bzw. 13 aus zwei antiparallel geschalteten Thyristoren 16, 17 bzw. 18, 19 bzw. 20, 21. Grundsätzlich ist es auch möglich, die Thyristoren 17, 19, 21 bzw. 16, 18, 20 jeweils durch Dioden zu ersetzen.

Die Bremseinrichtung wird im wesentlichen gebildet durch einen Thyristor 27, welcher zwischen den Phasenanschnittsteuerungen 11, 12 diesen nachgeschaltet angeordnet ist. Der Thyristor 27 wird durch eine Zündeinrichtung 28 gezündet, welche einer Schaltungsanordnung 29 für die Synchronisation der Umschaltung zwischen Treiben und Bremsen nachgeordnet ist. Eingänge dieser Schaltungsanordnung 29 sind einerseits mit den Ausgängen $U_{31}$ und $U_{13}$ des Transformators 1 bzw. der Umschalteinrichtung 2 und andererseits mit einer Grenzwertmeldeeinrichtung 30 für die Ermittlung des Schaltzustandes "Treiben" oder "Bremsen" verbunden, wobei diese Grenzwertmeldeeinrichtung ihrerseits wieder mit dem Ausgang der Betragsbildungseinrichtung 24 verbunden ist.

Beim Umschalten von Treiben auf Bremsen werden zunächst die Zündimpulse aus der Zündeinrichtung 10 für die Thyristoren 16 bis 21 der Phasenanschnittsteuerungen 11, 12 und 13 gesperrt und die Löschzeit der Thyristoren wird abgewartet (bei einer Netzfrequenz von 50 Hz also 25 ms). Anschließend wird mit Hilfe der Zündeinrichtung 28 der Thyristor 27, welcher als schaltbares Halbleiterbauelement im Ausführungsbeispiel eingesetzt ist, durchgeschaltet und ein als Brems-Thyristor wirkender Thyristor, z.B. der Thyristor 16, wird ebenfalls mittels der Zündeinrichtung 10 gezündet. Hierdurch wird an die Motorwicklung eine Gleichspannung angelegt, welche zur Ausbildung eines Gleichstroms längs der Pfeile 31 führt. Durch die Zündung der Diode 27 entsteht während der negativen Halbwelle des Brems-Thyristors 16 ein Freilaufstrom in Richtung des Pfeils 32. Der dementsprechend fließende Gleichstrom führt aufgrund der Induktion in den Wicklungen des rotierenden Läufers zu einem Strom, derart, daß eine Bremswirkung entsteht.

Die Gleichspannung kann von dem Transformator 1 abgegriffen werde, wenn diesem (in der Zeichnung nicht dargestellte) Gleichrichter und gegebenenfalls Glättungsglieder nachgeschaltet werden.

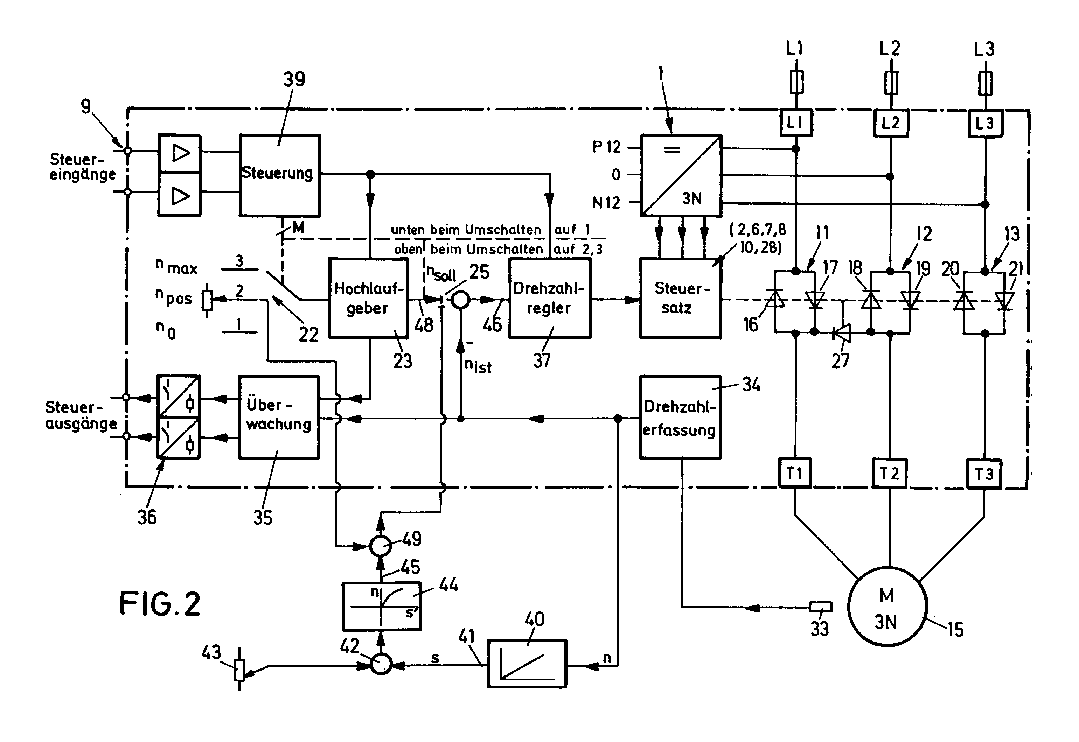

In Fig. 2 ist eine erfindungsgemäße Schaltungsanordnung dargestellt, bei welcher die in Fig. 1 dargestellte Schaltungsanordnung für einen Positionierantrieb verwendet wird. Die rechte Hälfte des Blockschaltbilds gemäß Fig. 2 entspricht im wesentlichen der in Fig. 1 dargestellten und im Zusammenhang hiermit beschriebenen Schaltungsanordnung.

Am Motor 15 ist ein Drehzahlgeber 33 vorgesehen, welcher mit einer Drehzahlerfassungseinrichtung 34 verbunden ist. Die Drehzahlerfassungseinrichtung 34 ist einerseits mit einer Überwachungseinrichtung 35 verbunden, welche den Steuerausgängen 36 vorgeschaltet ist, und andererseits mit dem Ausgang des Hochlaufgebers 23 bzw. dem Eingang eines Drehzahlreglers 37.

Beim Umschalten auf den Brems- bzw. Positionierzustand wird der Umschalter 25 betätigt, wodurch der Hochlaufgeber 23 ab- und der Drehzahlregelkreis aufgetrennt wird.

In diesem Schaltzustand ist die Drehzahlerfassungseinrichtung 34 mit einer als Ist-Weg-Geber wirkenden Integrationseinrichtung 40 verbunden, welche das Drehzahlsignal zu einem Weg-Signal aufintegriert. Deren Ausgang 41 ist mit einer Differenzbildungseinrichtung 42 verbunden, deren anderer Eingang mit einer Vorgabeeinrichtung 43, im Ausführungsbeispiel einem Potentiometer, zur Vorgabe des Positionier-Sollweges nach Erreichen eines Näherungsschalters 2 verbunden ist. In der Differenzbildungseinrichtung 42 wird ein Ist-Restweg-Signal gebildet, welches einer Vorgabeeinrichtung 44 für die Soll-Drehzahl n nachgeschaltet ist. Die Vorgabeeinrichtung 44 kann z.B. durch einen Mikroprozessor gebildet sein, in welchem eine Brems-Kurve in Form eine vorgegebenen Abhängigkeit der Drehzahl vom Restweg abgespeichert ist. Diese Kurve kann z.B. als Wurzelfunktion ausgestaltet sein, wodurch eine konstante Beschleunigung erreicht wird.

Der Ausgang 45 der Vorgabeeinrichtung 44 ist mit dem Eingang 46 des Drehzahlreglers 37 verbunden, so daß dem Drehzahlregler 37 entsprechend der vorgegebenen Abbremskurve ein Drehzahlwert vorgegeben wird.

Soll ein Abbremsen auf eine Positionierdrehzahl entsprechend der Schaltstellung 2 des Umschalters 22 erfolgen, wird hierzu die Differenzbildungseinrichtung 49 herangezogen, welche das Restweg-Signal entsprechend der Wegstrecke zwischen dem Punkt, an welchem die Positionierdrehzahl erreicht sein soll und dem Punkt des endgültigen Stillstandes korrigiert.

**Patentansprüche**

1. Schaltungsanordnung zur Steuerung des Anlaufens und Abbremsens von Drehstrom-Asynchronmotoren, wobei in den Motorstrom-Zuleitungen (L1, L2, L3) wenigstens zwei Phasen einer Phasenanschnittsteuerung angeordnet sind und jede Phasenanschnittsteuerung wenigstens einen von einer Steuereinrichtung gesteuerten Thyristor aufweist, wobei zwischen den Motorstrom-Zuleitungen (T₁, T₂) zweier Phasen (L1 bzw. L2 bzw. L3) nach wenigstens zwei Phasenanschnittsteuerungen (11, 12) eine Verbindungsleitung vorgesehen ist, in welcher ein schaltbares Halbleiterbauelement mit Gleichrichterwirkung angeordnet ist, dadurch gekennzeichnet, daß einer Drehzahlerfassungseinrichtung (34) eine als Ist-Weg-Geber wirkende Integrationseinrichtung (40) nachgeschaltet ist, deren Ausgang (41) mit einer Differenzbildungseinrichtung (42) verbunden ist, wobei deren anderer Eingang mit einer Vorgabeeinrichtung (43) zur Vorgabe des Positionier-Sollweges nach Erreichen eines Näherungsschalters verbunden ist, daß dem Ausgang der ein Ist-Restweg-Signal abgebenden Differenzbildungseinrichtung (42) eine Vorgabeeinrichtung (44) für die Soll-Drehzahl (n) in Abhängigkeit von dem Restweg (s') nachgeschaltet ist, und daß der Ausgang (45) dieser Vorgabeeinrichtung (44) mit dem Eingang (46) des Drehzahlreglers (37) verbunden ist.

2. Schaltungsanordnung nach Anspruch 1, dadurch gekennzeichnet, daß dem Eingang (46) des Drehzahlreglers (37) eine Umschalteinrichtung (25) zwischen dem Ausgang (48) eines Hochlaufgebers (23) und dem Ausgang (45) der Vorgabeeinrichtung (44) vorgeschaltet ist.

3. Schaltungsanordnung nach Anspruch 1 oder 2, dadurch gekennzeichnet, daß der Vorgabeeinrichtung (44) eine Differenzbildungseinrichtung (49) nachgeordnet ist, welche mit einer Umschalteinrichtung (22) zur Umschaltung auf eine Positionierdrehzahl verbunden ist.

4. Verfahren zur Steuerung des Abbremsens von Drehstrom-Asynchronmotoren unter Verwendung einer Schaltungsanordnung nach einem der Ansprüche 1 bis 3, bei dem die Ist-Drehzahl erfaßt sowie ein Drehzahl-Sollwert-Signal gebildet und einem Drehzahlregler zugeführt wird, dadurch gekennzeichnet, daß, das Ausgangssignal der Ist-Drehzahl zur Bildung eines Ist-Weg-Signals integriert wird, daß das Ist-Weg-Signal mit einem Positionierweg-Soll-Signal verglichen wird, und daß das Drehzahl-Sollwert-Signal in Abhängigkeit von eine vorgegebenen Bremskurve (Drehzahl in Abhängigkeit des Rest-Weges) gebildet wird.

5. Verfahren nach Anspruch 4, dadurch gekennzeichnet, daß als Abbrems-Kurve eine Wurzelfunktion vorgegeben wird.

6. Verfahren nach Anspruch 4 oder 5, dadurch gekennzeichnet, daß zum Umschalten von Treiben auf Bremsen die Zündimpulse für die Thyristoren der Phasenanschnittsteuerungen gesperrt werden, daß die Löschzeit der Thyristoren abgewartet wird, und daß dann das Halbleiterbauelement in der Verbindungsleitung durchgeschaltet und ein als Brems-Thyristor wirkender Thyristor der Phasenanschnittsteuerung gezündet wird.

## Claims

1. A circuit arrangement for controlling the starting and braking of polyphase current asynchronous motors, in which there is in the motor current feed conductors (1, 2, 3) at least two phases of a phase gating control system and in that each phase gating control system comprises at least one thyristor controlled by a control device, there being between the motor current supply conductors (T₁, T₂) of two phases (1, 2, 3) according to at least two phase gating control systems (11, 12) a connecting conductor in which there is disposed a switchable semiconductor component with a rectifier effect, characterised in that downstream of a speed detecting device (34) and acting as an actual path transmitter there is an integrating device (40) the output (41) of which is connected to a differential forming device (42), its other input being connected to a preset device (43) for predetermining the desired positioning travel once a proximity switch is reached. And in that there is downstream of the output from the differential forming device (42) which delivers an actual residual path signal a preset device (44) for the desired rotary speed n as a function of the residual path (s') and in that the output (45) from this preset device (44) is connected to the input (46) of the rotary speed regulator (37).

2. A circuit arrangement according to claim 1, characterised in that upstream of the input (46) of the rotary speed regulator (37) there is a switchover device (25) between the output (48) of a high speed transmitter (23) and the output (45) of the preset device (44).

3. A circuit arrangement according to claim 1 or 2, characterised in that downstream of the preset device (44) there is a differential forming device (49) which is connected to a switchover device (22) for switching over to a positioning speed.

4. A method of controlling the braking of polyphase current asynchronous motors employing a circuit arrangement according to one of claims 1 to 3, in which the actual rotary speed is ascertained and a desired rotary speed signal is formed and fed to a speed regulator, characterised in that the actual rotary speed is ascertained and in that the output signal of the actual rotary speed is integrated to form an actual path signal and in that the actual path signal is compared with a desired positioning travel signal and in that the desired rotary speed signal is formed as a function of a given braking curve (rotary speed as a function of the residual path).

5. A method according to claim 4, characterised in that a root function is provided as the braking curve.

6. A method according to claim 4 or 5, characterised in that to switch over from driving to braking the ignition pulses for the thyristors of the phase gating control systems are blocked and in that the arcing time of the thyristors is awaited and in that then the semiconductor component in the connecting line is switched through and in that a thyristor of the phase gating control system which is acting as a brake thyristor is ignited.

**Revendications**

1. Agencement de circuit pour la commande du démarrage et du freinage de moteurs asynchrones à courant triphasé, dans lequel au moins deux phases d'une commande de réglage de phase sont situées dans les lignes d'alimentation (L1, L2, L3) du moteur, chaque commande de réglage de phase présentant au moins un thyristor commandé par un dispositif de commande, et dans lequel il est prévu entre les lignes de deux phases d'alimentation ($T_1$, $T_2$) du moteur (L1, L2, L3) après au moins deux commandes de réglage de phase (11, 12) une ligne de raccordement dans laquelle est monté un composant semiconducteur commutable faisant fonction de redresseur, caractérisé en ce qu'un dispositif d'intégration (40) faisant fonction de capteur de distance effective est monté en aval d'un dispositif de détection de vitesse (34), la sortie (41) du dispositif d'intégration étant reliée à un dispositif de soustraction (42) dont l'autre entrée est connectée à un dispositif de prédétermination de temps alloué (43) pour prédéfinir la distance prescrite du positionnement après avoir atteint un détecteur de proximité, en ce qu'un dispositif de prédétermination du temps alloué (44) pour la vitesse prescrite (n) en fonction de la distance restante (s') est monté en aval de la sortie du dispositif de soustraction (42) produisant un signal de distance restante effective, et en ce que la sortie (45) de ce dispositif de prédétermination du temps alloué (44) est relié à l'entrée (46) du régulateur de vitesse (37).

2. Agencement de circuit selon la revendication 1, caractérisé en ce qu'un dispositif commutateur (25) est monté en amont de l'entrée (46) du régulateur de vitesse (37), entre la sortie (48) d'un capteur d'accélération (23) et la sortie (45) du dispositif de prédétermination du temps alloué (44).

3. Agencement de circuit selon la revendication 1 ou la revendication 2, caractérisé en ce qu'un dispositif de soustraction (49), monté en aval du dispositif de prédétermination du temps alloué (44) est relié à un dispositif commutateur (22) pour le passage à une vitesse de positionnement.

4. Procédé pour la commande du freinage de moteurs asynchrones à courant triphasé faisant appel à un agencement de circuit selon l'une quelconque des revendications 1 à 3, dans lequel la vitesse effective est détectée ainsi qu'un signal de valeur prescrite de vitesse est formé et amené à un régulateur de vitesse, caractérisé en ce que le signal de sortie est intégré à la vitesse effective pour former un signal de distance effective, en ce que le signal de distance effective est comparé à un signal de distance de positionnement de consigne et en ce que le signal de valeur prescrite de vitesse est formé en fonction d'une courbe de freinage prédéterminée (vitesse en fonction de la distance restante).

5. Procédé selon la revendication 4, caractérisé en ce qu'une fonction racine est prédéterminée en tant que courbe de freinage.

6. Procédé selon la revendication 4 ou la revendication 5, caractérisé en ce que pour la commutation de l'entraînement en freinage, les impulsions d'amorçage pour les thyristors des commandes de réglage de phase sont verrouillées, et en ce que le temps de désamorçage des thyristors est attendu, et en ce qu'alors le composant semiconducteur présent dans la ligne de raccordement est commuté et qu'un thyristor de la commande de réglage de phase faisant fonction de thyristor de freinage est amorcé.

FIG.1

analog
digital

EP 0 283 049 B1

FIG.2

Steuereingänge

Steuerung 39

9

Steuerausgänge

Überwachung 35

36

$n_{max}$ 3
$n_{pos}$ 2
$n_0$ 1

22

Hochlaufgeber 23

M

unten beim Umschalten auf 1
oben beim Umschalten auf 2,3

$n_{soll}$ 25

48

46

Drehzahlregler 37

$n_{ist}$

Steuersatz

(2,6,7,8
10,28)

P 12
0
N 12

3N

1

L1  L2  L3

L1  L2  L3

11  12  13

16  17 18 19 20 21

27

Drehzahl-
erfassung 34

T1  T2  T3

49

45

44

42

43

41  40

s  n

33

M
3N

15

EP 0 283 049 B1